# FASCICULE DE BREVET EUROPEEN

(11) **EP 2 796 035 B1**
(45) Date de publication et mention de la délivrance du brevet: **05.08.2015**
(21) Numéro de dépôt: 14354006.0
(22) Date de dépôt: 18.03.2014
(51) Int. Cl.: A01G 3/025

(54) **Outil manuel de coupe**
Handschneidewerkzeug
Hand-operated cutting tool

(30) Priorité: 26.04.2013 FR 1300981
(43) Date de publication de la demande: 29.10.2014
(73) Titulaire: Fiskars France SAS, 91320 Wissous (FR)
(72) Inventeur: Descombes, Frédéric Gilbert, F-73800 Sainte Hélène du Lac (FR); Thelisson, Chris, F-38300 Bourgoin Jallieu (FR)
(74) Mandataire: Talbot, Alexandre

(56) Documents cités:
- DE-U1-202008 013 798
- US-A- 3 372 478
- US-A1- 2009 044 412
- US-A1- 2011 162 213
- US-A1- 2012 186 087

## Description

### Domaine technique de l'invention

L'invention est relative à un outil de coupe manuel, en particulier un outil permettant de couper de gros objets.

### État de la technique

Les outils de coupe font partie des outils classiques utilisés dans le domaine du bricolage amateur ou professionnel.

L'un des outils les plus connus est par exemple la pince coupante. Elle permet de couper des petits objets tels que des fils métalliques ou des câbles, et est donc très utilisée par les électriciens. Dans le domaine du jardinage, un outil très utilisé est le sécateur, qui sert à couper des branches fines mesurant au maximum quelques millimètres d'épaisseur. Un tel sécateur est connu de US2009/044412 A1.

La pince coupante et le sécateur fonctionnent de manière analogue à des ciseaux. Lors de la découpe, l'utilisateur exerce un couple de forces maximal sur l'objet à couper lorsque celui est déjà entaillé à environ 60% de son épaisseur totale. Si l'objet à couper est fin cela n'est pas préjudiciable, mais plus il est épais, plus il est difficile de commencer à le couper et moins la découpe est nette.

Par conséquent, un inconvénient de ce type d'instrument est qu'il ne permet pas de découper des objets de gros diamètre, car la force que l'on peut exercer avec ce type d'outil est limitée.

Pour démultiplier l'effort, et donc couper des objets plus gros, une solution peut être d'augmenter la longueur du manche de l'outil. On entre alors dans la catégorie des coupe-boulons, taille-haies, etc.

De manière alternative, il est possible d'utiliser des outils dotés d'un système de genouillère, qui permet de démultiplier la force exercée par l'utilisateur sur la pièce à sectionner. Ce type d'outil comprend des lames de coupe montées d'une part en rotation de manière croisée sur des bras de levier, et d'autre part en rotation l'une par rapport à l'autre, l'axe de rotation commun aux lames de coupe étant positionné entre la zone de coupe et les deux axes de rotation liant les lames de coupe aux bras de levier.

Lors d'une découpe avec un coupe-boulons, on pourrait penser que la pièce métallique est en grande partie coupée par la partie coupante de l'outil. Pourtant le faciès de rupture de la pièce métallique montre que la pièce est tout d'abord coupée, puis arrachée.

### Objet de l'invention

Un objet de l'invention consiste à réaliser un outil de coupe manuel permettant de sectionner de gros objets en fournissant un effort moins important qu'avec les outils de l'art antérieur.

L'outil de coupe comprend avantageusement deux mâchoires pourvues chacune d'une lame de coupe, les deux mâchoires étant montées mobiles en rotation par rapport à un système de maintien de manière à définir une position fermée et une position ouverte.

L'outil de coupe comporte par ailleurs une première came montée en rotation par rapport à la première mâchoire, et comportant une première surface d'appui ayant une première courbure variable ainsi qu'une première lumière.

Il comporte également une seconde came montée en rotation par rapport à la seconde mâchoire et comportant une seconde surface d'appui ayant une seconde courbure variable ainsi qu'une seconde lumière, la seconde surface d'appui étant configurée pour être en liaison plane permanente avec la première surface d'appui.

Afin de transmettre le mouvement de la première came à la première mâchoire, un premier organe de connexion est positionné sur l'axe de rotation de la première came par rapport à la première mâchoire, et est configuré pour connecter ces dernières. Ce premier organe de connexion est au moins partiellement logé dans la seconde lumière.

De même, un second organe de connexion est positionné sur l'axe de rotation de la seconde came par rapport à la seconde mâchoire, et est configuré pour connecter la seconde came et la seconde mâchoire, et être au moins partiellement logé dans la première lumière.

De cette façon, l'amplitude de rotation de la première came est égale à la longueur de l'arc de la première lumière, et l'amplitude de rotation de la seconde came est égale à la longueur de l'arc de la seconde lumière.

La première came peut également comporter une première denture, et la seconde came peut comporter une seconde denture configurée pour engrener avec la première denture de la première came.

Selon un mode de réalisation de l'invention, les première et seconde surface d'appui peuvent être en contact dans une zone où leur courbure est maximale lorsque la zone de coupe présente un angle d'ouverture compris entre 3 et 6,5 degrés.

Par ailleurs, le premier organe de connexion est placé dans une zone de courbure maximale de la seconde lumière lorsque la zone de coupe présente un angle d'ouverture α compris entre 3 et 6.5 degrés. De même, le second organe de connexion est placé dans une zone de courbure maximale de la première lumière lorsque la zone de coupe présente un angle d'ouverture α compris entre 3 et 6.5 degrés.

La première came peut par ailleurs être solidaire d'un premier bras de levier, et la seconde came solidaire d'un second bras de levier.

Selon un mode de réalisation, les première et seconde surface d'appui peuvent être en contact dans une zone où leur courbure est leur maximale lorsque les bras de levier ont une ouverture comprise entre 20 et 40% de leur ouverture maximale.

Par ailleurs, le premier organe de connexion est placé dans une zone de courbure maximale de la seconde lumière lorsque les bras de levier ont une ouverture comprise entre 20 et 40% de leur ouverture maximale. De même, le second organe de connexion est placé dans une zone de courbure maximale de la première lumière lorsque les bras de levier ont une ouverture comprise entre 20 et 40% de leur ouverture maximale.

Selon un mode de réalisation particulier de l'invention, les axes de rotation de la première mâchoire et de la seconde mâchoire par rapport au système de maintien peuvent être parallèles.

De manière alternative, les axes de rotation de la première mâchoire et de la seconde mâchoire par rapport au système de maintien peuvent être confondus.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 est une vue éclatée d'un outil de coupe manuel selon un mode de réalisation,
- la figure 2 représente une vue de l'outil de coupe selon le mode de réalisation présenté à la figure 1, lorsque les pièces sont assemblées,
- les figures 3 et 4 illustrent un mode de réalisation particulier des première et deuxième cames,
- la figure 5 représente une vue de l'outil de coupe selon le mode de réalisation de la figure 1 lorsque les mâchoires sont partiellement ouvertes,
- la figure 6 représente schématiquement l'évolution de la démultiplication en fonction de l'ouverture de la zone de coupe pour un dispositif classique de l'art antérieur et pour un mode de réalisation de l'outil de coupe manuel.

### Description détaillée

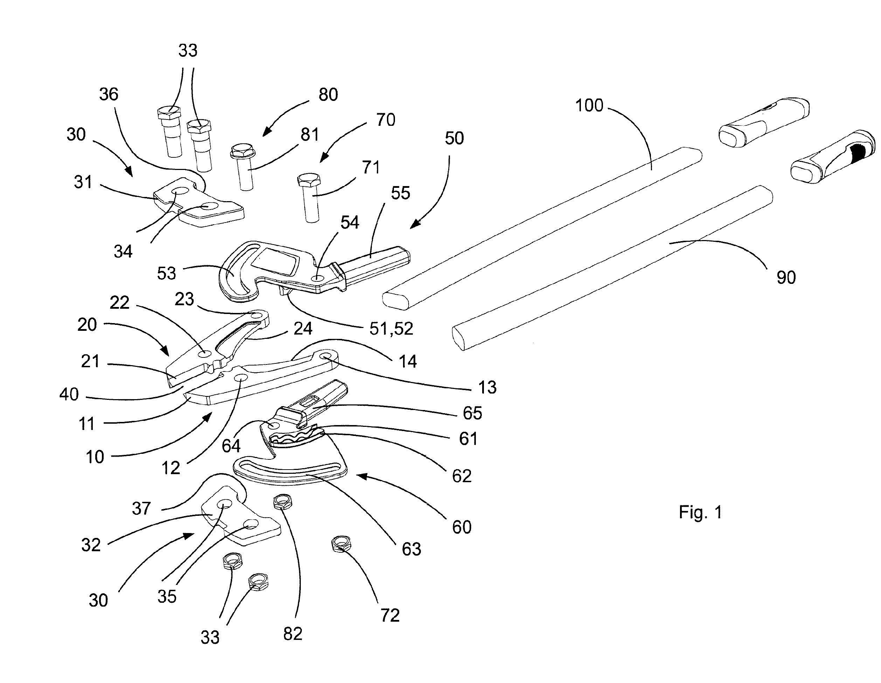

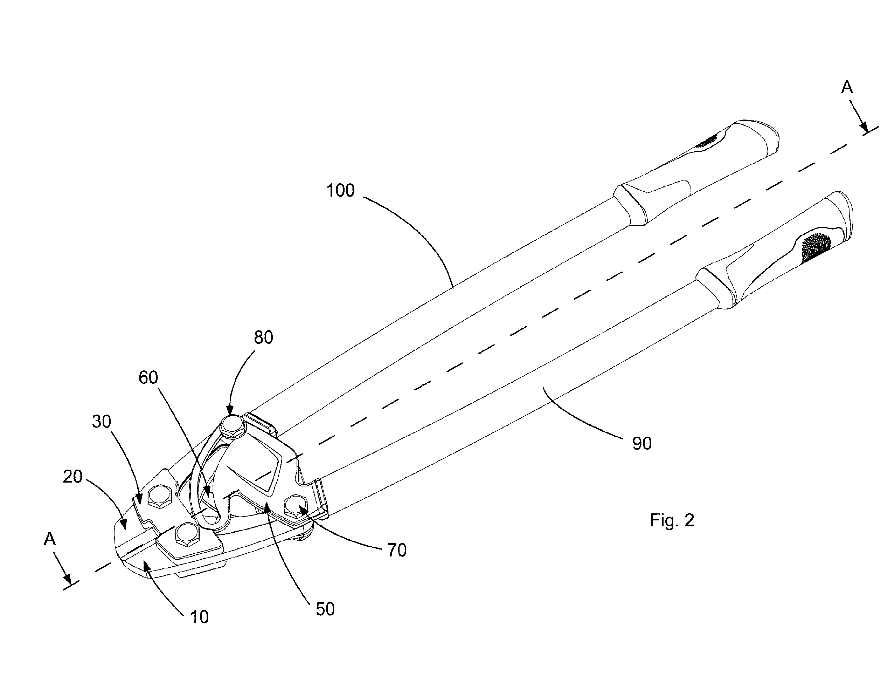

Sur les figures 1 et 2, on a représenté un mode de réalisation d'un outil de coupe manuel destiné à couper de gros objets, comme par exemple un coupe-boulons.

L'outil de coupe comporte une première mâchoire 10 et une seconde mâchoire 20 dotées chacune d'une lame de coupe 11 et 21 pour permettre la coupe d'un objet. Les première et seconde mâchoires 10 et 20 sont montées mobiles en rotation par rapport à un système de maintien 30 de façon à ce qu'une zone de coupe 40 définie par les deux lames 11 et 21 puisse s'ouvrir et se fermer.

Selon les modes de réalisation de l'outil de coupe, les axes de rotation de la première mâchoire 10 et de la seconde mâchoire 20 par rapport au système de maintien peuvent avantageusement être parallèles ou confondus.

Les figures 1 et 2 présentent un outil dans lequel les axes de rotation des mâchoires 10 et 20 de l'outil sont parallèles. Dans ce cas, les mâchoires 10 et 20 sont avantageusement coplanaires. Dans ce mode de réalisation particulier, les mâchoires 10 et 20 sont prises en sandwich entre une première plaque de maintien 31 et une seconde plaque de maintien 32, et sont maintenues avantageusement au moyen de deux boulons 33 traversant par exemple des trous 34 de la première plaque de maintien, des trous 12 et 22 des première et seconde mâchoires 10 et 20, et des trous 35 de la seconde plaque de maintien 32.

Dans un mode de réalisation alternatif (non représenté) où les axes de rotation des première et seconde mâchoires 10 et 20 par rapport au système de maintien 30 sont confondus, le système de maintien 30 peut comprendre un simple organe tel qu'une vis, un clou ou un rivet positionné sur l'axe de rotation des mâchoires 10 et 20 et traversant ces dernières. Dans ce cas, les mâchoires 10 et 20 ne sont pas coplanaires et sont assemblées de façon analogue à des ciseaux.

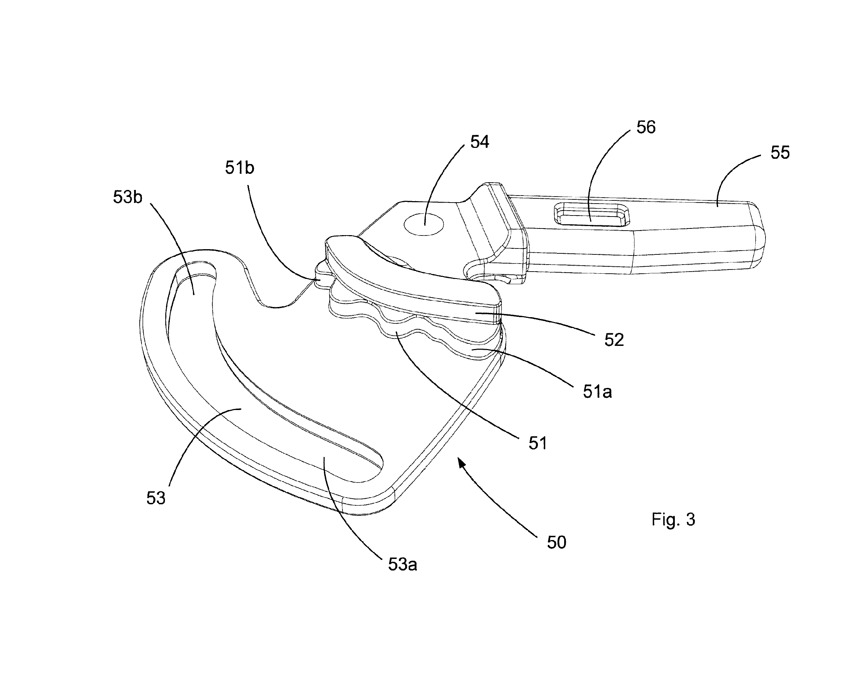

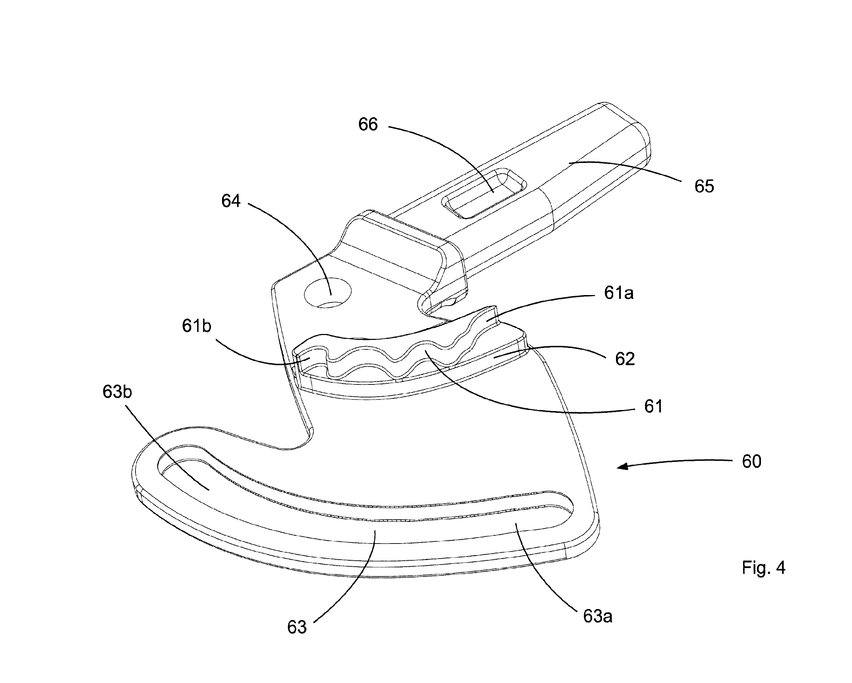

L'outil de coupe manuel comporte également une première came 50 et une deuxième came 60, respectivement dotées d'une première denture 51 et d'une seconde denture 61 (cf. figures 3 et 4) configurées pour engrener l'une avec l'autre.

Les cames 50 et 60 sont également pourvues de surfaces d'appui 52 et 62. Plus précisément, la première surface d'appui 52 de la première came 50 est placée au-dessus de la première denture 51, tandis que la seconde surface d'appui 62 de la seconde came 60 est placée au-dessous de la seconde denture 61.

Les surfaces d'appui 52 et 62 permettent l'application d'un couple de forces élevées lors de la découpe d'un objet, tandis que les dentures 51 et 61 empêchent le glissement de la première came 50 par rapport à la deuxième 60 au cours de la découpe.

Les première et seconde cames 50 et 60 sont par ailleurs dotées d'une première lumière 53 et d'une seconde lumière 63.

Les première et seconde cames 50 et 60 sont avantageusement montées en rotation respectivement sur la première mâchoire 10 et sur la seconde mâchoire 20.

Pour cela, un premier organe de connexion 70, par exemple un boulon comprenant une vis 71 et un écrou 72 est positionné sur l'axe de rotation de la première came 50 par rapport à la première mâchoire 10. Il traverse un trou 54 de la première came 50, un trou 13 de la première mâchoire 10 et débouche dans la seconde lumière 63 de la seconde came 60.

De manière similaire, un second organe de connexion 80 tel qu'une vis 81 et un écrou 82 traverse un trou 64 de la seconde came 60, un trou 23 de la seconde mâchoire 2, et débouche dans la première lumière 53 de la première came 50.

De cette façon, l'amplitude de rotation de la première came 50 correspond à la longueur de l'arc de la première lumière 53, et l'amplitude de rotation de la seconde came 60 correspond à la longueur de l'arc de la seconde lumière 63.

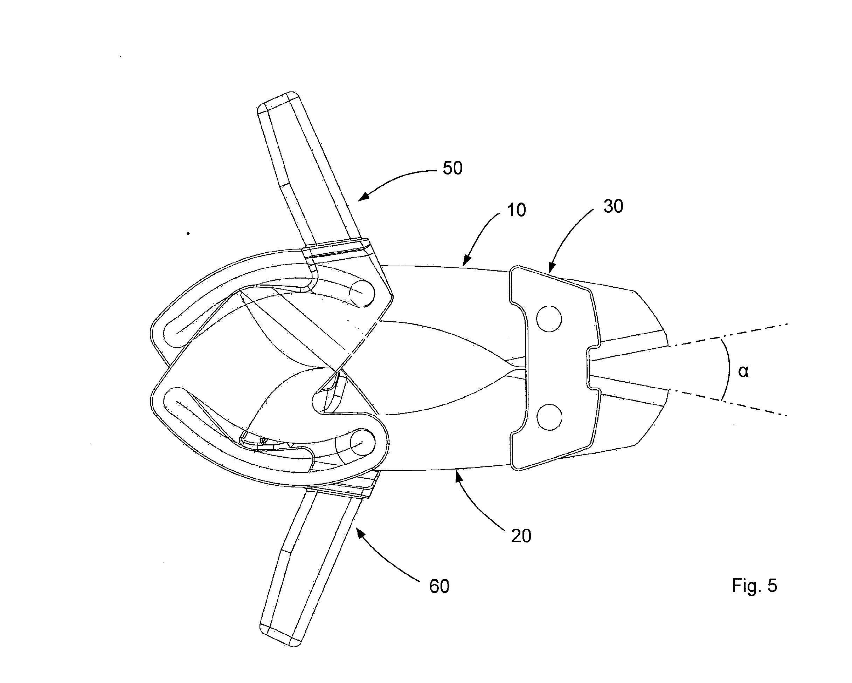

Pour éviter les frottements, un jeu de l'ordre du millimètre est prévu entre le système de maintien 30 et les première et seconde cames 50 et 60 lorsque ces dernières sont en position fermée. Lorsque les première et seconde cames sont en position ouvertes, ces dernières sont éloignées du système de maintien (voir figure 5). De cette façon, il n'existe aucun contact entre les cames et le système de maintien au cours de l'utilisation de l'outil de coupe. Ainsi, les risques d'endommagement de l'outil sont moindres lorsqu'un utilisateur exerce une force importante lors de la coupe d'un objet.

L'outil de coupe peut avantageusement être monté sur des premier et second bras de levier 90 et 100, en particulier, la première came 50 peut être solidarisé au premier bras de levier 90, et la seconde came 60 peut être solidarisée au second bras de levier 100.

Dans le mode de réalisation illustré sur les figures, la première came 50 est munie d'un premier tronc 55 comprenant une première mortaise 56, et la seconde came 60 est munie d'un second tronc 65 comprenant une seconde mortaise 66. Les premières et secondes mortaises 56 et 66 sont avantageusement configurées pour coopérer avec des tenons (non représentés) situés à l'intérieur des premier et second bras de levier 90 et 100. Cela permet de réaliser un assemblage rapide et solide des bras de levier sur l'outil de coupe.

Au cours de son utilisation, les bras de levier 90 et 100 sont écartés par l'utilisateur, qui fait pivoter le premier bras de lever 90 dans le sens horaire, et le second bras de levier 100 dans le sens anti-horaire. Les cames 50 et 60 étant solidaires des bras de levier 90 et 100, il en résulte que la première came 50 tourne dans le sens horaire et la seconde came 60 tourne dans le sens anti-horaire.

Les organes de connexion 70 et 80 se rapprochent lorsque les bras de levier 90 et 100 s'écartent, ce qui permet de faire pivoter les mâchoires 10 et 20 par rapport au système de maintien 30, de sorte que la zone de coupe 40 passe d'une position fermée à une position ouverte. La distance séparant les organes de connexion 70 et 80 est maximale lorsque l'outil de coupe est fermé, et est minimale lorsque l'outil de coupe est ouvert au maximum.

Par ailleurs, lorsque l'utilisateur écarte les bras de levier 90 et 100, l'organe de connexion 70 se déplace à l'intérieur de la seconde lumière 63 d'une zone 63a vers une zone 63b. De même, l'organe de connexion 80 se déplace à l'intérieur de la première lumière 53 d'une zone 53a vers une zone 53b.

Les organes de connexion 70 et 80 se situent respectivement dans les zones 63a et 53a lorsque l'outil de coupe est en position fermée, et ils se situent dans les zones 63b et 53b lorsque l'outil de coupe est en position ouverte.

Par ailleurs, lorsqu'on écarte les bras de levier 90 et 100, la surface d'appui 52 de la première came 50 coulisse le long de la surface d'appui 62 de la seconde came 60. La ligne de contact entre les surfaces d'appui 52 et 62 est avantageusement orthogonale à l'axe de symétrie centrale AA que présente l'outil de coupe.

Au cours de l'ouverture de l'outil de coupe, la première denture 51 et la seconde denture 61 engrènent l'une avec l'autre de l'arrière des cames 50 et 60, c'est-à-dire des zones 51 a et 61 a, vers l'avant c'est-à-dire des zones 51 b et 61 b.

La forme des dentures 51 et 61 est adaptée pour empêcher tout glissement des première et deuxième cames 50 et 60 l'une par rapport à l'autre. Le risque de glissement est maximum lorsque l'objet n'a pas encore été entaillé et que l'utilisateur commence la coupe, c'est-à-dire lorsque l'outil est ouvert. Ce sont alors les zones 51 b et 61 b des dentures qui interagissent, et ces dernières sont par conséquent configurées pour résister à des couples de forces élevés au moyen de dents profondes.

Lorsque l'objet est entaillé, le risque de glissement des cames 50 et 60 l'une par rapport à l'autre diminue, et il est donc possible de modifier les formes des dentures dans les zones 51 a et 61 a pour que ces dernières soient moins profondes et que leur pas soit plus grand. Il en résulte que la forme globale de chaque denture 51 et 61 est irrégulière, mais celles-ci peuvent être adaptées en fonction des contraintes exercées sur l'outil et des exigences de l'utilisateur.

Contrairement aux outils de coupe de l'art antérieur, et notamment aux systèmes pourvus de genouillères, les forces exercées par l'utilisateur sont avantageusement démultipliées lorsque ce dernier en a le plus besoin. En effet, avec un système à genouillère, la démultiplication de la force augmente continument au fur et à mesure que l'utilisateur ferme les bras de levier, c'est-à-dire lorsque l'ouverture de la zone de coupe diminue. La démultiplication d'un système à genouillère est maximale lorsque les bras de levier sont quasiment fermés, c'est-à-dire après que l'objet soit coupé. Au contraire, l'outil de coupe permet une démultiplication importante au cours de la découpe de l'objet, puis une démultiplication faible ou nulle après que l'objet soit coupé.

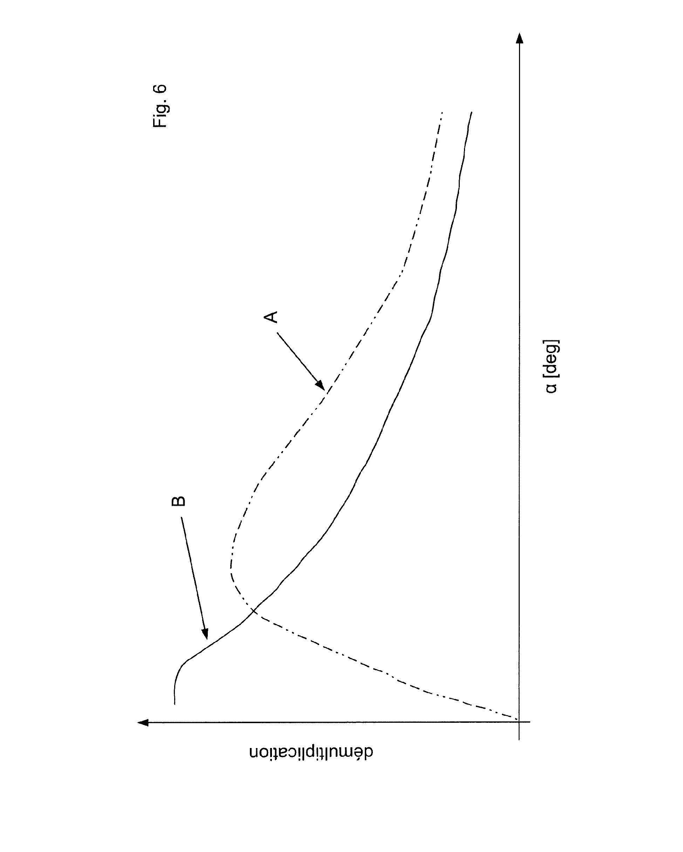

A titre illustratif, la figure 6 représente schématiquement les variations de la démultiplication d'un mode de réalisation d'un outil de coupe (courbe A) et d'un système à genouillère (courbe B) en fonction de l'angle d'ouverture α de la zone de coupe 40 (cf. figure 5).

Pour que la démultiplication soit optimale au cours de la découpe d'un objet, les formes des première et seconde surfaces d'appui 52 et 62, ainsi que les formes des première et seconde lumières 53 et 63 sont judicieusement choisies.

Dans le mode de réalisation présenté sur les figures, lorsque les surfaces d'appui 52 et 62 sont en contact dans des zones ayant une courbure maximale, la démultiplication est maximale. De même, lorsque les organes de connexion 70 et 80 sont positionnés dans des zones des lumières 53 et 63 ayant une courbure maximale, la démultiplication est maximale.

La structure de l'outil de coupe manuel peut avantageusement être configurée pour qu'un certain type d'objet soit entièrement sectionné lorsque la démultiplication est maximale ou au voisinage de son maximum. Par type d'objet, on entend par exemple des objets métalliques tel que des boulons, des tors à béton ou des objets en bois tel que des branches.

Dans un mode de réalisation particulier adapté à la découpe d'objet métalliques, l'outil de coupe manuel est avantageusement configuré de façon à ce que la démultiplication soit maximale lorsque les bras de levier 90 et 100 ont une ouverture comprise entre 20 et 40% de leur ouverture maximale, où lorsqu'il y a une ouverture α de la zone de coupe 40 comprise entre 3 et 6.5 degrés.

Lorsque l'ouverture des bras de levier 90 et 100 devient inférieure à 20% de l'ouverture maximale, ou encore pour un angle α inférieur à 3 degrés, la courbure des surfaces d'appui 52 et 62, et la courbure des lumières 53 et 63 diminue avantageusement, ce qui permet de diminuer la démultiplication, voire de la rendre nulle.

Une ouverture α de la zone de coupe 40 comprise entre 3 et 6.5 degrés est bien adaptée à la découpe d'objets métalliques, ou d'objets ayant une gamme de dureté analogue à celle d'objets métalliques. Dans ce mode de réalisation particulier de l'outil, si l'objet à couper est réalisé dans un matériau de dureté plus faible, celui-ci est sectionné lorsque l'ouverture de la zone de coupe 40 est inférieure à 3 degrés. Inversement, un objet réalisé dans un matériau de dureté plus élevée est sectionné lorsque l'ouverture de la zone de coupe 40 est supérieure à 6.5 degrés.

Par ailleurs, selon un mode de réalisation particulier, les zones 53a et 63a des lumières peuvent avantageusement avoir une courbure inverse de celle du reste des lumières. Le fait d'inverser le signe de la courbure permet de s'assurer que l'ouverture α de la zone de coupe 40 est nulle lorsque les bras de levier 90 et 100 sont en position fermée, c'est-à-dire lorsque leur ouverture est minimale. Il s'agit d'une sécurité visant à empêcher un accident éventuel, par exemple lorsque l'utilisateur manipule l'outil.

Enfin, les différentes pièces qui composent l'outil sont réalisées dans un matériau suffisamment rigide pour résister aux contraintes de coupe. Un matériau pouvant par exemple être utilisé est l'acier. Dans le cas où l'outil est un coupe-boulons, les lames de coupe 11 et 21 peuvent avantageusement être réalisées en acier trempé.

## Revendications

1. Outil de coupe manuel comportant :
• deux mâchoires (10, 20) pourvues chacune d'une lame de coupe (11, 21), les deux mâchoires (10, 20) étant montées mobiles en rotation par rapport à un système de maintien (30) de manière à définir une position fermée et une position ouverte d'une zone de coupe (40),
• une première came (50) montée en rotation par rapport à la première mâchoire (10), comportant une première surface d'appui (52) ayant une première courbure variable, ainsi qu'une première lumière (53),
• une seconde came (60) montée en rotation par rapport à la seconde mâchoire (20), comportant une seconde surface d'appui (62) ayant une seconde courbure variable, la seconde surface d'appui (62) étant configurée pour être en liaison plane permanente avec la première surface d'appui (52), ainsi qu'une seconde lumière (63),
• un premier organe de connexion (70) positionné sur l'axe de rotation de la première came (50) par rapport à la première mâchoire (10), configuré pour connecter la première came (50) et la première mâchoire (10), et être au moins partiellement logé dans la seconde lumière (63), de sorte que l'amplitude de rotation de la seconde came (60) est égale à la longueur de l'arc de la seconde lumière (63),
• un second organe de connexion (80) positionné sur l'axe de rotation de la seconde came (60) par rapport à la seconde mâchoire (20), configuré pour connecter la seconde came (60) et la seconde mâchoire (20), et être au moins partiellement logé dans la première lumière (53), de sorte que l'amplitude de rotation de la première came (50) est égale à la longueur de l'arc de la première lumière (53).

2. Outil de coupe manuel selon la revendication 1, dans lequel :
• la première came (50) comporte une première denture (51),
• la seconde came (60) comporte une seconde denture (61) configurée pour engrener avec la première denture (51) de la première came (50).

3. Outil de coupe manuel selon l'une quelconque des revendications 1 ou 2, dans lequel les première et seconde surface d'appui (52, 62) sont en contact dans une zone où leur courbure est maximale lorsque la zone de coupe (40) présente un angle d'ouverture compris entre 3 et 6,5 degrés.

4. Outil de coupe manuel selon l'une quelconque des revendications 1 à 3, dans lequel le premier organe de connexion (70) est placé dans une zone de courbure maximale de la seconde lumière (63), et dans lequel le second organe de connexion (80) est placé dans une zone de courbure maximale de la première lumière (53) lorsque la zone de coupe (40) présente un angle d'ouverture compris entre 3 et 6,5 degrés.

5. Outil de coupe manuel selon l'une quelconque des revendications 1 à 4, dans lequel :
• la première came (50) est solidaire d'un premier bras de levier (90), et
• la seconde came (60) est solidaire d'un second bras de levier (100).

6. Outil de coupe manuel selon la revendication 5, dans lequel les première et seconde surface d'appui (52, 62) sont en contact dans une zone où leur courbure est maximale lorsque les bras de levier (90, 100) ont une ouverture comprise entre 20 et 40% de leur ouverture maximale.

7. Outil de coupe manuel selon l'une quelconque des revendications 5 ou 6, dans lequel le premier organe de connexion (70) est placé dans une zone de courbure maximale de la seconde lumière (63), et dans lequel le second organe de connexion (80) est placé dans une zone de courbure maximale de la première lumière (53) lorsque les bras de levier (90, 100) ont une ouverture comprise entre 20 et 40% de leur ouverture maximale.

8. Outil de coupe manuel selon l'une quelconque des revendications 1 à 7, dans lequel les axes de rotation de la première mâchoire (10) et de la seconde mâchoire (20) par rapport au système de maintien (30) sont parallèles.

9. Outil de coupe manuel selon l'une quelconque des revendications 1 à 8, dans lequel les axes de rotation de la première mâchoire (10) et de la seconde mâchoire (20) par rapport au système de maintien (30) sont confondus.

## Patentansprüche

1. Handschneidewerkzeug mit:
- zwei Backen (10, 20), die jeweils mit einem Schneidmesser (11, 21) versehen sind, wobei die beiden Backen (10, 20) bezogen auf ein Haltesystem (30) dergestalt drehbeweglich angebracht sind, dass sie eine Schließstellung und eine Öffnungsstellung einer Schneidzone (40) bilden,
- einem drehbar zur ersten Backe (10) angebrachten ersten Kurvenführungsteil (50), das eine erste Anlagefläche (52) mit einer ersten variablen Krümmung sowie ein erstes Schlitzloch (53) aufweist,
- einem drehbar zur zweiten Backe (20) angebrachten zweiten Kurvenführungsteil (60), das eine zweite Anlagefläche (62) mit einer zweiten variablen Krümmung, wobei die zweite Anlagefläche (62) so geformt ist, dass sie sich in ständigem ebenen Kontakt mit der ersten Anlagefläche (52) befindet, sowie ein zweites Schlitzloch (63) aufweist,
- einem ersten Verbindungsorgan (70), das auf der Drehachse des ersten Kurvenführungsteils (50), bezogen auf die erste Backe (10), positioniert ist und so gestaltet ist, dass es das erste Kurvenführungsteil (50) und die erste Backe (10) miteinander verbindet, und zumindest teilweise in dem zweiten Schlitzloch (63) aufgenommen ist, so dass die Drehweite des zweiten Kurvenführungsteils (60) gleich der Länge des Bogens des zweiten Schlitzlochs (63) ist,
- einem zweiten Verbindungsorgan (80), das auf der Drehachse des zweiten Kurvenführungsteils (60), bezogen auf die zweite Backe (20), positioniert ist und so gestaltet ist, dass es das zweite Kurvenführungsteil (60) und die zweite Backe (20) miteinander verbindet, und zumindest teilweise in dem ersten Schlitzloch (53) aufgenommen ist, so dass die Drehweite des ersten Kurvenführungsteils (50) gleich der Länge des Bogens des ersten Schlitzlochs (53) ist.

2. Handschneidewerkzeug nach Anspruch 1,wobei:
- das erste Kurvenführungsteil (50) eine erste Zahnung (51) aufweist,
- das zweite Kurvenführungsteil (60) eine zweite Zahnung (61) aufweist, die so geformt ist, dass sie mit der ersten Zahnung (51) der ersten Kurvenführungsteil (50) in Eingriff kommt.

3. Handschneidewerkzeug nach einem der Ansprüche 1 oder 2, wobei die erste und die zweite Anlagefläche (52, 62) sich in Kontakt in einem Bereich befinden, in dem ihre Krümmung maximal ist, wenn die Schneidzone (40) einen Öffnungswinkel von 3 bis 6,5 Grad aufweist.

4. Handschneidewerkzeug nach einem der Ansprüche 1 bis 3, wobei das erste Verbindungsorgan (70) in einem Bereich maximaler Krümmung des zweiten Schlitzlochs (63) platziert ist, und wobei das zweite Verbindungsorgan (80) in einem Bereich maximaler Krümmung des ersten Schlitzlochs (53) platziert ist, wenn die Schneidzone (40) einen Öffnungswinkel von 3 bis 6,5 Grad aufweist.

5. Handschneidewerkzeug nach einem der Ansprüche 1 bis 4, wobei:
- das erste Kurvenführungsteil (50) mit einem ersten Hebelarm (90) fest verbunden ist, und
- das zweite Kurvenführungsteil (60) mit einem zweiten Hebelarm (100) fest verbunden ist.

6. Handschneidewerkzeug nach Anspruch 5, wobei die erste und die zweite Anlagefläche (52, 62) sich in Kontakt in einem Bereich befinden, in dem ihre Krümmung maximal ist, wenn die Hebelarme (90, 100) eine Öffnung von 20 bis 40 % ihrer maximalen Öffnung aufweisen.

7. Handschneidewerkzeug nach einem der Ansprüche 5 oder 6, wobei das erste Verbindungsorgan (70) in einem Bereich maximaler Krümmung des zweiten Schlitzlochs (63) platziert ist, und wobei das zweite Verbindungsorgan (80) in einem Bereich maximaler Krümmung des ersten Schlitzlochs (53) platziert ist, wenn die Hebelarme (90, 100) eine Öffnung von 20 bis 40 % ihrer maximalen Öffnung aufweisen.

8. Handschneidewerkzeug nach einem der Ansprüche 1 bis 7, wobei die Drehachsen der ersten Backe (10) und der zweiten Backe (20) bezogen auf das Haltesystem (30) parallel verlaufen.

9. Handschneidewerkzeug nach einem der Ansprüche 1 bis 8, wobei die Drehachsen der ersten Backe (10) und der zweiten Backe (20) bezogen auf das Haltesystem (30) aufeinander liegen.

## Claims

1. A manual cutting tool comprising:
• two jaws (10, 20) each provided with a cutting blade (11, 21), the two jaws (10, 20) being mounted movable in rotation with respect to a securing system (30) so as to define a closed position and an open position of a cutting area (40),
• a first cam (50) mounted rotating with respect to the first jaw (10), comprising a first bearing surface (52) having a first variable curvature, and a first aperture (53),
• a second cam (60) mounted rotating with respect to the second jaw (20), comprising a second bearing surface (62) having a second variable curvature, the second bearing surface (62) being configured to be in permanent flat connection with the first bearing surface (52), and a second aperture (63),
• a first connection part (70) positioned on the axis of rotation of the first cam (50) with respect to the first jaw (10) and configured to connect the first cam (50) and first jaw (10) and to be at least partially housed in the second aperture (63) so that the amplitude of rotation of the second cam (60) is equal to the length of the arc of the second aperture (63),
• a second connection part (80) positioned on the axis of rotation of the second cam (60) with respect to the second jaw (20), configured to connect the second cam (60) and the second jaw (20) and to be at least partially housed in the first aperture (53) so that the amplitude of rotation of the first cam (50) is equal to the length of the arc of the first aperture (53).

2. The manual cutting tool according to claim 1, wherein:
• the first cam (50) comprises a first set of teeth (51),
• the second cam (60) comprises a second set of teeth (61) configured to intermesh with the first set of teeth (51) of the first cam (50).

3. The manual cutting tool according to any one of claims 1 or 2, wherein the first and second bearing surfaces (52, 62) are in contact in an area where their curvature is maximum when the cutting area (40) presents an opening angle comprised between 3 and 6.5 degrees.

4. The manual cutting tool according to any one of claims 1 to 3, wherein the first connection part (70) is placed in an area of maximum curvature of the second aperture (63), and wherein the second connection part (80) is placed in an area of maximum curvature of the first aperture (53) when the cutting area (40) presents an opening angle comprised between 3 and 6.5 degrees.

5. The manual cutting tool according to any one of claims 1 to 4, wherein:
• the first cam (50) is securedly united to a first lever arm (90), and
• the second cam (60) is securedly united to a second lever arm (100).

6. The manual cutting tool according to claim 5, wherein the first and second bearing surfaces (52, 62) are in contact in an area where their curvature is maximum when the lever arms (90, 100) have an opening comprised between 20 and 40% of their maximum opening.

7. The manual cutting tool according to either one of claims 5 or 6, wherein the first connection part (70) is placed in an area of maximum curvature of the second aperture (63), and wherein the second connection part (80) is placed in an area of maximum curvature of the first aperture (53) when the lever arms (90, 100) have an opening comprised between 20 and 40% of their maximum opening.

8. The manual cutting tool according to any one of claims 1 to 7, wherein the axes of rotation of the first jaw (10) and of the second jaw (20) with respect to the securing system (30) are parallel.

9. The manual cutting tool according to any one of claims 1 to 8, wherein the axes of rotation of the first jaw (10) and of the second jaw (20) with respect to the securing system (30) are identical.
